# EUROPEAN PATENT APPLICATION

(11) **EP 0 958 749 A1**
(43) Date of publication of application: **24.11.1999**
(21) Application number: 98200927.6
(22) Date of filing: 24.03.1998
(51) Int. Cl.: A23K 3/00, A23L 3/349

(54) **Preservation by higher alcohols**

(71) Applicant: Stichting Instituut voor Dierhouderij en Diergezondheid (ID-DLO), 8219 PH Lelystad (NL); Rijksuniversiteit te Groningen, 9712 CP Groningen (NL); Stichting voor de Technische Wetenschappen, 3431 HA Nieuwegein (NL)
(72) Inventor: The designation of the inventor has not yet been filed
(74) Representative: Smulders, Theodorus A.H.J., Ir.

(57) **Abstract**

The invention relates to compositions for use in treating, preparing or preserving (animal) feed and silage. Fermentation is a microbial process which, when applied to forage and/or foodstuff can change a wide range of aspects (e.g. taste, texture and storability) of the original starting material. A fermented forage and/or foodstuff can spoil by oxygen ingress due to the growth of spoilage micro-organisms (e.g. certain groups of yeasts, moulds and bacteria). The invention provides an additive useful for the preparation and preservation of forage and/or foodstuff which composition at least comprises a C₂-C₁₀ monohydric alcohol and which additionally may comprise at least one short-chain (C₁-C₁₀) carboxylic acid. Monohydric alcohols have a inhibitory effect on spoilage micro-organisms. This effect is (synergistically) enhanced by the presence of carboxylic acids.

## Description

The invention relates to additives for use in treating, preparing or preserving (animal) foodstuff, such as forage and silage.

Forage (e.g. whole crop cereals such as corn or wheat, grasses, legumes, lucerne or byproducts of the food processing industry) are often stored in the form of a silage, produced from these materials by fermentation processes.

Fermentation is a microbial process which, when applied to foodstuff, can change a wide range of aspects, such as taste, texture, appearance and storability of the original starting material. Fermentation often starts spontaneously in a foodstuff as a result of the growth of micro-organisms (e.g. bacteria and yeasts) already present in the starting material, or starts after the addition of (a mixture) of a starting culture of micro-organisms. Fermentation processes lay at the basis of many typical foods, such as cheese, soy-based foods, beer and other foods for human and/or animal consumption. Fermentation processes often have multiple phases, wherein during a certain phase of fermentation one type of micro-organism is predominantly present, after which another type becomes more important. A typical example is a fermentation process in which an initial majority of aerobic organisms is replaced by anaerobic organisms when all oxygen in the fermenting material has been consumed.

A problem which is associated with ensiled forages is aerobic spoilage. This process of spoilage can be divided into phases. The onset of deterioration is due to the degradation of preserving organic acids by yeasts and occasionally acetic acid bacteria or other spoilage micro-organisms. This will cause a rise in pH, and thus start a secondary spoilage phase which is associated with increasing temperature and activity of spoilage micro-organisms such as bacilli. The last phase includes the activity of many organisms such as moulds and enterobacteria. Aerobic spoilage is seen in almost all silages that are opened and exposed to air. However the rate of spoilage is highly dependent on the numbers and activity of the spoilage organisms in the silage. In silages with a high dry matter content (i.e. > 30%) aerobic spoilage often proceeds very rapidly.

It is clear that to inhibit spoilage, the spoilage organisms, in particularly the ones causing the onset of deterioration (e.g. yeasts and acetic acid bacteria) have to be inhibited in their activity and growth. It has become increasingly common to use chemical and biological additives during ensiling. Nevertheless most of these additives only promote silage fermentation and do not improve, but often even decrease, aerobic stability. Some additives which have been used for the improvement of aerobic stability include chemical additives based on fatty acids such as propionic acid, or combinations of formic acid with octanoic acid, or biological additives based on propionic acid or bacteriocin producing micro-organisms such as propionibacteria, lactobacilli, bacilli, etc. A drawback of the chemical additives is that they are corrosive to the equipment used, and can be dangerous to handle. The biological additives are non-corrosive and safe to handle, but they can be costly. Furthermore their effectiveness can be less reliable, since it is based on the activity of living organisms.

The invention provides an additive for the preparation or preservation of forage and/or foodstuff, for example for inhibiting aerobic spoilage, which composition at least comprises a C₂-C₁₀ monohydric alcohol such as for example one of n-ethyl-, n-propyl-, n-butyl-, tert-butyl-, 2-propyl-, 2-butyl-, isoamyl-, or n-pentylalcohol or a mixture thereof.

The invention provides for example a method whereby aerobic spoilage of silage can be effectively inhibited by application of an additive comprising at least one of a C₂-C₁₀ monohydric alcohol such as for example: n-ethyl-, n-propyl-, n-butyl-, tert-butyl-, 2-propyl-, 2-butyl-, isoamyl-, n-pentylalcohol or mixtures thereof.

In a preferred embodiment of the invention an additive is provided which at least comprises propanol, butanol or pentanol. In the experimental part of this description an example is given of use of such an additive provided by the invention. The application rate of the alcohol appears to be dependent on its partition coefficient in a hydrophobic environment. In general, it is observed that the more hydrophobic the alcohol is the more effective it is in preventing spoilage, i.e. the effectiveness of pentanol > butanol > propanol > ethanol. To obtain an optimal improvement of the aerobic stability of silage the final alcohol concentration in the silage should be within a certain range, i.e. high enough to inhibit the spoilage microorganisms, and low enough to prevent drastic inhibition of the desired fermentative microorganisms such as lactic acid bacteria. The optimal application rate of the alcohol mixture will be dependent on the exact composition of the mixture, and can be determined for each composition. The following application rates can be used as a guide. A preferred amount of propanol is in the range of 5-15 g/kg fresh weight (FW), and more preferably 8-10 g/kg FW. A preferred amount of butanol is in the range of 1-8 g/kg FW, and more preferably 3-5 g/kg FW. A preferred amount of pentanol is in the range of 0.5-5 g/kg FW, and more preferably 1-3 g/kg FW. It is preferred to use an additive which is derived from a by-product from for example an industrial (fermentation) process. Very suitable by-products are fusel oils. These fusel oils are for example formed during (sugarbeet) molasses fermentation, a process used for the production of ethanol, ethanol-based chemicals, or bakers yeast. In general, fusel oils contain high amounts of n-isoamyl-, n-propyl-, and isobutyl alcohol, and can also contain methyl-, ethyl-, and propyl acetate. Depending on the concentration of the various alcohols and other compounds in such by-products, it may be incorporated directly in an additive as provided by the invention, or it may be mixed with another alcohol or carboxylic acid, or both.

Furthermore, some compounds act as precursor for C₂-C₁₀ monohydric alcohols and/or C₁-C₁₀ carboxylic acids. Our research for example showed that, in silage, 1,2-propanediol is converted into propionic acid and propanol. Adding such precursors to forage, prior to ensiling, therefore also has a benificial effect on aerobic stability.

The invention also provides an additive according to the invention which comprises short-chain (C₁-C₁₀) carboxylic (organic) acids. We found that mixtures of monohydric alcohols such as C₂-C₁₀ monohydric alcohol and short-chain (C₁-C₁₀) carboxylic (organic) acids have a synergistic inhibitory effect. If alcohol is used in combination with a fatty acid such as propionic acid (commercially applied at 3-4 g/kg), the amount of both components can optionally be lowered at least two-fold (e.g. 4-5 g/kg propanol + 1.5-2 g/kg propionic acid). Application of at least one of said alcohols or alcohol and acid mixtures to silages significantly decreases aerobic spoilage.

Not wishing to be bound by the following theory, it is believed that the alcohols can inhibit the spoilage organisms *per se*. Furthermore an additional (synergistic) inhibitory effect can be obtained if the alcohols in the silage are (partially) oxidized to their acidic counterparts by microorganisms such as acetic acid bacteria. It is believed that the synergistic inhibitory effect by combinations of C₂-C₁₀ alcohols and organic acids is due to the enhancement of membrane permeability by the alcohols, thus increasing the diffusion of undissociated fatty acids into the cell.

The invention also provides a method for treating foodstuff susceptible to spoilage by micro-organisms which method comprises treating the foodstuff with an additive according to the invention. The invention for example provides a method wherein the foodstuff is animal feed, such as hay. Yet another example of a method provided by the invention comprises the treatment of silage, preferably of whole crop cereals such as corn (maize) or wheat, grasses, legumes, or alfalfa.

The invention also provides foodstuff which has been treated with a method provided by the invention, thereby providing foodstuff which is less or not susceptible to spoilage by micro-organisms.

An additive provided by the invention is for example prepared as a liquid for applying to a suitable animal feed or forage in the preparation or preservation of the forage.

To obtain an optimum improvement of the aerobic stability of the silage the liquid is applied evenly over the forage upon application, using conventional methods. The composition can be applied at any time from immediately prior to cutting until the time of storage, and/or may be sprayed on the parts of the silage which are exposed to air during storage and feedout.

The following examples illustrate but do not limit the invention.

### EXAMPLE 1

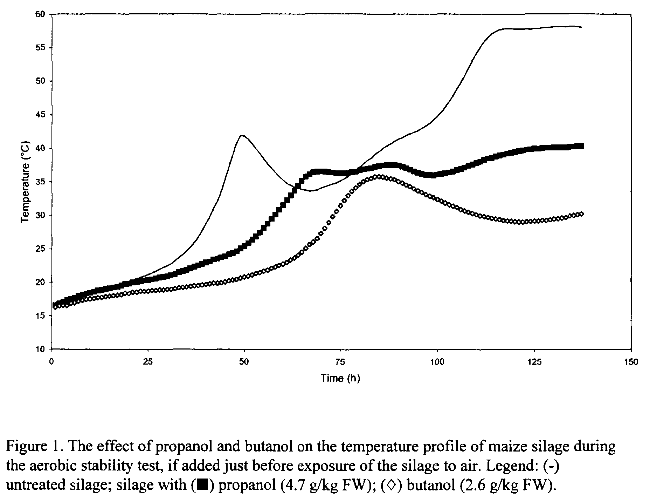

Whole crop maize silage (DM content = 36%), ensiled without additives, was treated (3 kg portions) with n-propanol or n-butanol just prior to exposing it to air. The aerobic spoilage of the silage was followed by monitoring the increase in pH, the decrease of preserving acids such as lactic and acetic acid (first 3 days), the increase of preserving acids such as propionic and butyric acid, and the increase in temperature (first week).
From the results presented in Table 1 and Fig. 1 it is clear that propanol and/or butanol addition retards the degradation of the preserving lactic acid and acetic acid, increases the amount of the preserving acids (i.e. propionic or butyric acid), and retards the increase of silage pH, and silage temperature. This clearly shows that such alcohols can improve the aerobic stability of the silage.

### EXAMPLE 2

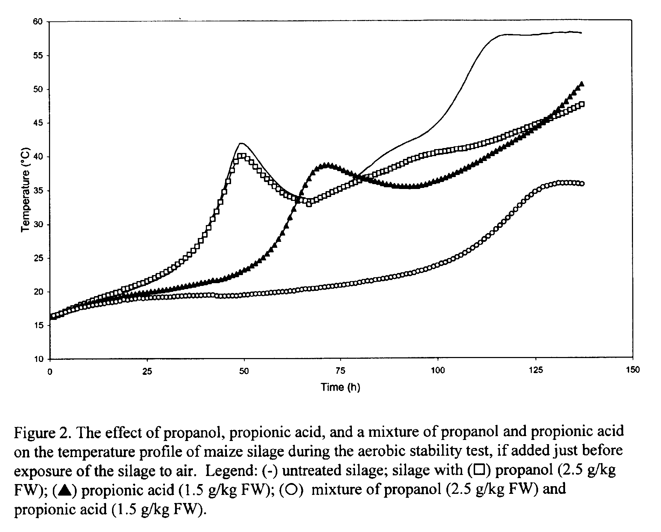

Whole crop maize silage (DM content = 36%), ensiled without additives, was treated (3 kg portions) with n-propanol, propionic acid, or a mixture of both compounds, just prior to exposing it to air. Aerobic spoilage of the silage was followed by monitoring the increase in pH, changes in concentrations of the preserving lactic, acetic and propionic acid (first 3 days), and the increase in temperature (first week).
The results of example 2 (Table 2, Fig. 2.) demonstrate that low concentrations of propanol, which have no spoilage inhibitory effect when used alone, can, when used in combination with a fatty acid such as propionate, synergistically increase the inhibitory effect of this acid.

### EXAMPLE 3

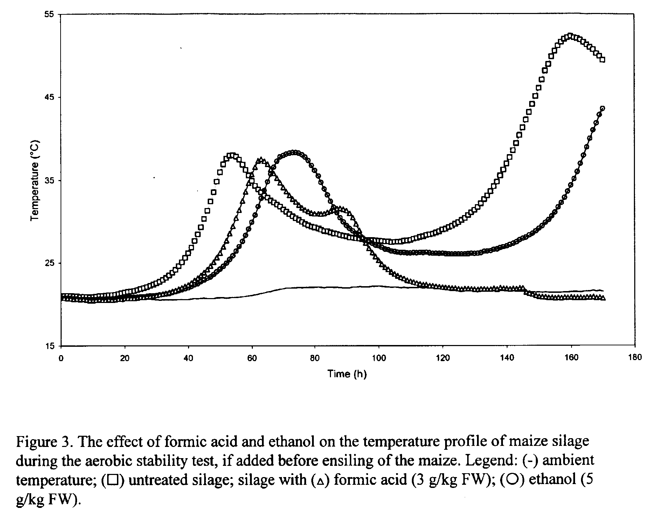

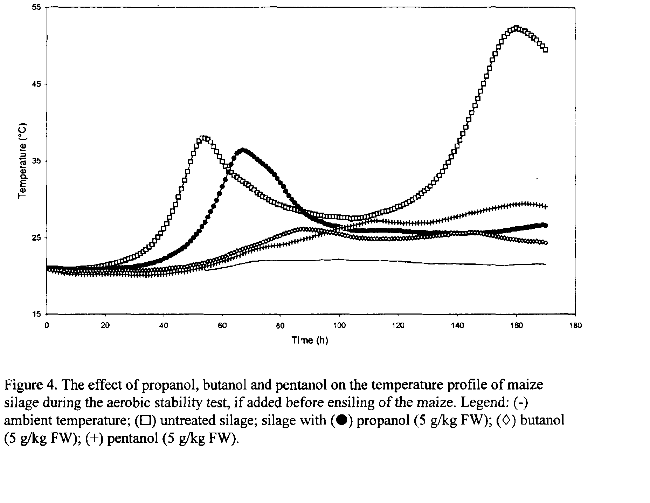

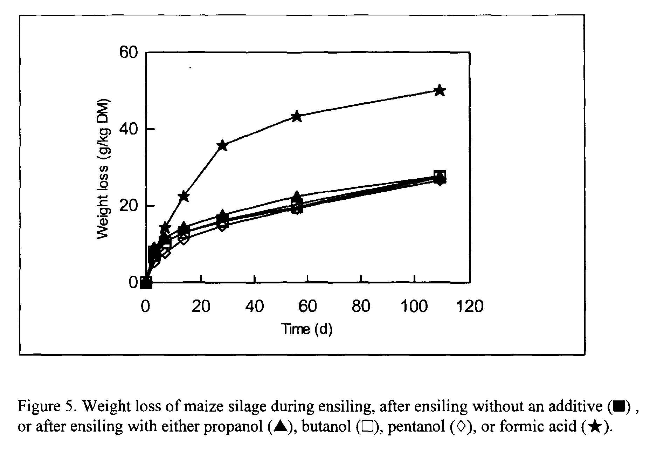

Whole crop maize silage (DM content = 39%), was treated with ethanol (5 g/kg FW), n-propanol (5 g/kg FW), n-butanol (5 g/kg FW), n-pentanol (5 g/kg FW), or formic acid (3 g/kg FW), prior to ensiling. Per treatment maize was ensiled in two double polyethylene bags (40-l, 2 x 0.15 mm thickness), and stored in the dark at 20°C. The amount of maize ensiled was approx. 5 kg per bag. Weight loss of the bags was followed in time. The bags were opened 109 days postfilling and the silages were analyzed for pH and aerobic stability. The aerobic stability of the silage was analyzed by monitoring the temperature increase in the silage (Fig. 3 and 4) and by observing the weight loss of the silage (Fig. 5) after exposing the silage to air.
The pH of all silages was between pH 3.9 and 4.0. Figures 3 and 4 show that ethanol, propanol, butanol, pentanol, and formic acid all increase the aerobic stability of the silage. Furthermore Fig. 3 and 4 indicate that at an application rate of 5 g/kg FW, butanol and pentanol are more effective spoilage inhibitors than propanol or ethanol. An additional advantage of silage treatment with propanol, butanol or pentanol, compared to treatment with formic acid is the fact that the alcohols, in contrast to formic acid, have no negative effect on the weight loss of the silage, as is depicted in Fig. 5.

### DISCUSSION

### Effect of alcohols

The exact mechanisms behind the inhibitory effect of alcohols are not exactly clear. There is a positive correlation between the hydrophobicity of alcohols and their ability to inhibit glucose utilization and uptake (Ingram and Buttke, 1984; Leão and van Uden, 1982; Carlsen et al., 1991), which could indicate that alcohols affect the cell membrane. There are also indications that ethanol can act as an inhibitor of glycolysis by competitive and non-competitive interaction with essential enzymes of this pathway (Millar et al., 1982). However, whether this is also the case for higher alcohols is unknown. Non-specific inhibitory effects of ethanol, due to the accumulation of toxic compounds, and reduced water activity, have also been proposed (Jones, 1989). Other reports describe the non-competitive inhibitory effect of ethanol on transport of sugars and amino acids (Thomas and Rose, 1979, Leão and van Uden, 1982; Iglesias et al., 1991).

### Effect of organic acids

The inhibitory effects of organic acids are mainly related to the amount of undissociated acid (Baird-Parker, 1980; Sofos and Busta, 1981; Adams and Hall, 1988; Östling and Lindgren, 1993). Dissociated molecules only have a minor inhibitory effect (Eklund, 1983; 1985). The degree of inhibition by organic acids is therefore the highest at or below the p*K*ₐ of the acids. Undissociated organic acids can diffuse through the cell membrane via passive diffusion (Cramer and Prestegard, 1977), and dissociate inside the cell, according to the internal pH, into anions and protons. This dissociation can cause acidification of the cytoplasm, which in turn can lead to the disruption of the proton-motive force, and the inhibition of energy-yielding processes, substrate transport, and macromolecular synthesis (Freese et al., 1973; Baird-Parker, 1980; Cherrington et al., 1990). In order to protect themselves against the inhibitory effects of organic acids, most bacteria can use proton pumps or proton/exchange systems to maintain the intracellular pH near neutral (Booth, 1985). In addition, some organisms are able to actively pump back dissociated acids through the cell membrane (e.g. lactate) via an energy demanding transport system (Warth, 1977; Cássio et al., 1987). Others are able to synthesize neutral products from the acidic products (Booth, 1985). Some yeasts can assimilate lactate and acetate (Middelhoven et al., 1986), while *Escherichia coli* can assimilate acetate (Baird-Parker, 1980). The degree of inhibition by short-chain fatty acids is however not only related to the p*K*ₐ of the acid but also to the chain length. The inhibitory effect increases with increasing chain length (Woolford, 1975), with C11-C14 being most inhibitory (Gershon and Shanks, 1978). Furthermore it is known that mixtures of short-chain fatty acids can have a synergistic inhibitory effect on silage fungi (Moon, 1983).

### FIGURES

**Figure 1.** The effect of propanol and butanol on the temperature profile of maize silage during the aerobic stability test, if added just before exposure of the silage to air. Legend: (-) untreated silage; silage with (■) propanol (4.7 g/kg FW); (◇) butanol (2.6 g/kg FW).
**Figure 2.** The effect of propanol, propionic acid, and a mixture of propanol and propionic acid on the temperature profile of maize silage during the aerobic stability test, if added just before exposure of the silage to air. Legend: (-) untreated silage; silage with (□) propanol (2.5 g/kg FW); (▲) propionic acid (1.5 g/kg FW); (○) mixture of propanol (2.5 g/kg FW) and propionic acid (1.5 g/kg FW).
**Figure 3.** The effect of formic acid and ethanol on the temperature profile of maize silage during the aerobic stability test, if added before ensiling of the maize. Legend: (-) ambient temperature; (□) untreated silage; silage with (△) formic acid (3 g/kg FW); (○) ethanol (5 g/kg FW).
**Figure 4.** The effect of propanol, butanol and pentanol on the temperature profile of maize silage during the aerobic stability test, if added before ensiling of the maize. Legend: (-) ambient temperature; (□) untreated silage; silage with (●) propanol (5 g/kg FW); (◇) butanol (5 g/kg FW); (+) pentanol (5 g/kg FW).
**Figure 5**. Weight loss of maize silage during ensiling, after ensiling without an additive (■), or after ensiling with either propanol (▲), butanol (□), pentanol (◇), or formic acid ( 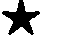 ).

### REFERENCES

**Adams, M.R., and Hall, C.J.** (1988) Growth inhibition of foodborne pathogens by lactic and acetic acids and their mixtures. *Int. J. Food Sci. Technol.*, 23: 287-292.
**Baird-Parker, A.C.** (1980) Organic acids. *In: Microbial Ecology of Foods, Vol. 1*. *Factors Affecting Life and Death of Micro-organisms* (eds., Silliker, J.H., Elliot, R.P., Baird-Parker, A.C., Bryan, F.L., Christian, J.H.B, Clark, D.S., Olson, J.C.B. and Roberts, T.A.) pp. 126-135. The International Commission on Microbiological Specification for Foods. New York, Academic Press.
**Booth, I.R.** (1985) Regulation of cytoplasmic pH in bacteria. *Microbiol. Rev*., 49: 359-378.
**Carlsen, H.N., Degn, H. and Lloyd, D.** (1991) Effects of alcohols on the respiration and fermentation of aerated suspensions of baker's yeast. *J. Gen. Microbiol.*, 137: 2879-2883.
**Cássio, F., Leão, C. and van Uden,N.** (1987) Transport of lactate and other short-chain monocarboxylates in the yeast *Saccharomyces cerevisiae. Appl. Eviron. Microbiol.* 53: 509-513.
**Cherrington, C.A., Hinton, M. and Chopra, I.** (1990) Effect of short-chain organic acids on macromolecular synthesis in *Escherichia coli. J. Appl. Bacteriol*., 68: 69-74.
**Cramer, J.A. and Prestegard, J.H.** (1977) NMR studies of pH-included transport of carboxylic acids across phospholipid vesicle membranes. *Biochem. Biophys. Res. Commun.*, 75: 295-301.
**Eklund, T.** (1983) The antimicrobial effect of dissociated and undissociated sorbic acid at different pH levels. *J. Appl. Bacteriol.*, 54: 383-389.
**Eklund, T.** (1985) Inhibition of microbial growth at different pH levels by benzoic and propionic acids and esters of p-hydroxybenzoic acid. *Int. J. Food Microbiol.*, 2: 159-167.
**Freese, E., Sheu, C.W. and Galliers, E.** (1973) Function of lipophilic acids as antimicrobial food additives. *Nature* (London), 241: 321-325.
**Gershon, H. and Shanks, L.** (1978) Antifungal activity of fatty acids and derivatives: Structure activity relationschips. *In: The Pharmacological Effect of Lipids* (ed., Kabara, A.) pp. 51-62. The American Oil Chemists' Society. Champaign, Illoinois.
**Iglesias, R., Ferreas, J.M., Arias, F.J., Muñoz, R. and Girbés, T.** (1991) Effect of continues exposition to ethanol on activity of the ammonium and fructose transport systems in *Saccharomyces cerevisiae var. ellipsoideus. Biotechnol. Bioengin.*, 37: 389-391.
**Ingram, L.O. and Buttke, T.M.** (1984) Effects of alcohols on micro-organisms. *Adv. Microbial Physiol.*, 25: 253-300.
**Jones, R.P.** (1989) Biological principles for the effects of ethanol. *Enz. Microbiol. Technol*., 11: 130-153.
**Leão, C. and van Uden, N.** (1982) Effect of ethanol and other alkanols on the glucose transport system of *Saccharomyces cerevisiae. Biotechnol. Bioengin.*, 24: 2601-2604.
**Middelhoven, W.J. and Franzen, M.M.** (1986) The yeast flora of ensiled whole-crop maize. *J. Sci. Food Agric.*, 37: 855-861.
**Millar, D.G., Griffiths-Smith, K., Algar, E. and Scopes, R.K.** (1982) Activity and stability of glycolytic enzymes in the presence of ethanol. *Biotechnol. Lett.*, 4: 601-606.
**Moon, N.J.** (1983) Inhibition of the growth of acid tolerant yeasts by acetate, lactate and propionate and their synergistic mixtures. *J. Appl. Bacteriol*., 55: 453-460.
**Östling, C.E. and Lindgren, S.E.** (1993) Inhibition of enterobacteria and *Listeria* growth by lactic, acetic and formic acids. *J. Appl. Bacteriol.*, 75: 18-24.
**Thomas, D.S. and Rose, A.H**. (1979) Inhibitory effect of ethanol on growth and solute accumulation by *Saccharomyces cerevisiae* as affected by plasma-membrane lipid composition. *Arch. Microbiol.*, 122:49-55.
**Sofos, J.N. and Busta, F.F.** (1981) Antimicrobial activity of sorbate. *J. Food Protect.*, 44: 614-622.
**Warth, A.D.** (1977) Mechanism of resistance of *Saccharomyces bailii* to benzoic, sorbic and other weak acids used as food preservatives. *J. Appl. Bacteriol.*, 43: 215-230.
**Woolford, M.K.** (1975) Microbiological screening of the straight chain fatty acids (C₁-C₁₂) as potential silage additives. *J. Sci. Food Agric.*, 26: 219-228.

**Table 1**

| **Fermentation profiles** | | | | |
|---|---|---|---|---|
| | **Starting material** | **Untreated** | **Propanol 4.7 g/kg** | **Butanol 2.6 g/kg** |
| | **T=0 days** | **T=3 days** | | |
| pH | 3.85 | 4.16 | 4.05 | 3.94 |
| Lactic acid (g/kg) | 21 | 13 | 14 | 17 |
| Acetic acid (g/kg) | 6 | 5 | 2 | 4 |
| Propionic acid (g/kg) | 0 | 0 | 2 | 0 |
| Butyric acid (g/kg) | 0 | 0 | 0 | 0.2 |

**Table 2**

| **Fermentation profiles** | | | | | | | | |
|---|---|---|---|---|---|---|---|---|
| | **Untreated** | | **Propanol** | | **Propionic acid** | | **Propanol + Propionic acid** | |
| **(T=days)** | **T=0** | **T=3** | **T=0** | **T=3** | **T=0** | **T=3** | **T=0** | **T=3** |
| pH | 3.85 | 4.16 | 3.85 | 4.08 | 3.84 | 3.99 | 3.84 | 3.80 |
| Lactic acid (g/kg) | 21 | 13 | 21 | 15 | 21 | 15 | 22 | 22 |
| Acetic acid (g/kg) | 6 | 5 | 6 | 5 | 6 | 3 | 6 | 6 |
| Propanol (g/kg) | 0 | 0 | 2.5 | 1 | 0 | 0 | 2.5 | 2.5 |
| Propionic acid (g/kg) | 0 | 0 | 0 | 2 | 1.5 | 1.5 | 1.5 | 2 |

## Claims

1. A foodstuff additive useful for inhibiting aerobic spoilage of forage and/or foodstuff which composition at least comprises a C₂-C₁₀ monohydric alcohol, or a mixture thereof.

2. An additive according to claim 1 at least comprising propanol, butanol or pentanol.

3. An additive according to claim 1 or 2 which comprises a by-product such as fusel oil.

4. An additive according to claim 1, 2 or 3 which additionally comprises at least one (C₁-C₁₀) carboxylic acid.

5. A method for treating foodstuff susceptible to spoilage by micro-organisms which comprises treating the foodstuff with an additive according to any of the aforegoing claims.

6. A method according to claim 5 wherein the foodstuff is animal feed.

7. A method according to claim 6 wherein the animal feed is silage, preferably of whole crop cereals (e.g. corn or wheat), grasses, legumes or alfalfa.

8. A method according to claim 6 wherein the animal feed is silage of by-products from the food processing industry, such as sugarbeet pulp or spent brewers grain.

9. Foodstuff which has been treated with a method according to any of claims 5 to 9.
